# EUROPÄISCHE PATENTANMELDUNG

(11) **EP 4 508 967 A1**
(43) Veröffentlichungstag der Anmeldung: **19.02.2025**
(21) Anmeldenummer: 24187645.7
(22) Anmeldetag: 10.07.2024
(51) Int. Cl.: A01C 23/00

(54) **DÜNGEMITTELVERTEILER ZUR BODENNAHEN AUSBRINGUNG VON DÜNGEMITTELN**

(30) Priorität: 28.07.2023 DE 102023120172
(71) Anmelder: TAB GmbH Technik für Agrar und Bau, 54597 Auw bei Prüm (DE)
(72) Erfinder: Brandt, Peter, 54597 Auw (DE); Brandt, Andreas, 54597 Auw (DE)
(74) Vertreter: Dr. Träger & Strautmann PAe PartG mbB

(57) **Zusammenfassung**

Die Erfindung betrifft einen Düngemittelverteiler (50) zur Ausbringung pumpfähiger Düngemittel (41), umfassend:
- ein mit einem Düngefahrzeug (100) koppelbares Gestell (10) mit sich quer zur Fahrtrichtung (FR) erstreckenden Auslegern (11),
- eine Verteileinrichtung (12) zur Weiterleitung von aus dem Düngefahrzeug geförderten Düngemitteln,
- wobei die Verteileinrichtung eine Vielzahl von Ausbringschläuchen (13) mit Öffnungen (14) zur bodennahen Ausbringung des Düngemittels (41) aufweist,
- und wobei die Öffnungen der Ausbringschläuche im Arbeitseinsatz weniger als 500 mm von einer zu düngenden Bodenfläche (40) beabstandet sind.
Um die Düngemittel möglichst gleichmäßig zu verteilen, wird vorgeschlagen, dass wenigstens einem Ausbringschlauch der Verteileinrichtung ein mit der Öffnung des Ausbringschlauches koinzidierender Prallteller (15) zugeordnet ist, auf welchen das auszubringende Düngemittel im Arbeitseinsatz prallt und von welchem es fächerförmig verteilt wird.

## Beschreibung

Die Erfindung betrifft einen Düngemittelverteiler zur bodennahen Ausbringung von Düngemitteln nach dem Oberbegriff des Anspruchs 1 sowie ein Düngefahrzeug mit einem solchen Düngemittelverteiler.

Das Verteilen von flüssigen oder zumindest pumpfähigen Düngemitteln über eine Bodenfläche mit Hilfe eines Düngemittelverteilers ist eine an sich bekannte Technik. Das auszubringende Düngemittel wird üblicherweise in einem Pumptankwagen, auch "Güllefass" genannt, zu einer zu düngenden Fläche transportiert und dort mittels eines an den Pumptankwagen gekoppelten Düngemittelverteilers verteilt.

Aus DE 20 2006 008 173 U1 ist ein an ein Düngefahrzeug gekoppelter Düngemittelverteiler bekannt, der einen Tragrahmen mit zwei schwenkbaren Auslegern umfasst. Im Arbeitseinsatz sind die Ausleger ausgeschwenkt und erstrecken sich über eine Breite von beispielsweise zehn bis zwanzig Metern. Über zwei Rohrverteiler wird das auszubringende Düngemittel einer Vielzahl von Ausbringschläuchen zugeführt. Die Ausbringschläuche sind nebeneinander und über die gesamte Arbeitsbreite gleichmäßig verteilt an den Auslegern angebracht.

An den Enden der Ausbringschläuche können Schleifschuhe angebracht sein. Die mit Schleifschuhen versehenen Ausbringschläuche sind so lang, dass die Schläuche bzw. die daran angebrachten Schleifschuhe den Untergrund kontaktieren. Bei Vorwärtsfahrt werden die Ausbringschläuche hinter dem Düngemittelverteiler hergezogen und folgen dem Bodenprofil. Mittels der Ausbringschläuche wird das Düngemittel während der Vorwärtsfahrt in Form langgestreckter, zueinander paralleler Streifen, abgelegt.

Die vom Düngemittel bereitgestellte Nährstoffkonzentration ist innerhalb dieser Düngemittelstreifen sehr hoch und zwischen den Düngemittelstreifen sehr niedrig. Die Nährstoffverteilung ist deshalb nach Ausbringen des Düngemittels entsprechend ungleichmäßig.

Zudem können sich bei ungünstiger Viskosität des Düngemittels und/oder ungünstigen Witterungsverhältnissen - insbesondere durch Austrocknen der Streifen auf dem Boden - wurstartige Strukturen oder Klumpen bilden, die nicht vom Boden aufnehmbar sind. Solche Klumpen, die vom Boden nicht aufgenommen worden sind, können dauerhaft an anwachsenden Pflanzen haften und bei der Ernte mit ins Erntegut gelangen. Die Thematik der Futterverschmutzung - insbesondere im Grünlandbereich durch Reste der auf eine Bodenfläche ausgebrachten Düngemittel - beschäftigt viele Landwirte.

Aus DE 20 2021 102 219 U1 ist ein Gülleauslauf für einen Schleppschuhverteiler einer Gülleausbringvorrichtung bekannt. Die aus den Schleppschläuchen auslaufende Gülle fließt bei dem aus DE 20 2021 102 219 U1 offenbarten System nicht direkt auf den Boden, sondern wird zunächst auf einen an der Auslauföffnung eines Schleppschlauches angeordneten Gülleauslauf weitergeleitet. Der Gülleauslauf ist mittels einer Befestigungsvorrichtung am Schlauchende angebracht und umfasst eine Verteileinrichtung mit wenigstens zwei voneinander getrennten und nach oben hin offenen Führungsbahnen. Ein aus den Schleppschläuchen austretender Gesamt-Güllestrang wird entsprechend der Anzahl der Führungsbahnen in mehrere Teilstränge aufgeteilt. Anstelle eines breiten Güllestranges je Schleppschlauch werden so zwei oder mehr unterteilte kleinere Gülle-Teilstränge parallel zueinander auf dem zu düngenden Boden abgelegt. Nachteilig hieran ist, dass eine exakte Feinverteilung der Gülle auch bei Vorhandensein mehrerer Führungsbahnen nicht möglich ist, da die Führungsbahnen systembedingt grundsätzlich nebeneinander angeordnete, streifenförmige, Güllestränge auf dem Boden ablegen. Die Gülle ist in mehreren kleineren Streifen zwar weniger stark konzentriert als in einem Gesamtstreifen, sie ist aber auch in den schmaleren Streifen immer noch so stark konzentriert, dass hierdurch die Zersetzung verlangsamt und/oder behindert wird.

Aufgabe der Erfindung ist es, die beschriebenen Nachteile zu beseitigen und eine Lösung bereitzustellen, mittels welcher die Düngemittel so auf dem Untergrund verteilt werden, dass sie zum einen möglichst gleichmäßig auf einer zu düngenden Bodenfläche verteilt werden und zum anderen weitgehend rückstandslos vom Boden aufnehmbar sind.

Diese Aufgabe wird gelöst durch einen Düngemittelverteiler mit den Merkmalen des Anspruchs 1.

Der vorgeschlagene Düngemittelverteiler umfasst:
- ein mit einem Düngefahrzeug koppelbares Gestell mit sich quer zur Fahrtrichtung erstreckenden Auslegern,
- eine Verteileinrichtung zur Weiterleitung von aus dem Düngefahrzeug geförderten Düngemitteln,
- wobei die Verteileinrichtung eine Vielzahl von Ausbringschläuchen mit Öffnungen zur bodennahen Ausbringung des Düngemittels aufweist,
- und wobei die Öffnungen der Ausbringschläuche im Arbeitseinsatz vorzugsweise weniger als 500 mm von einer zu düngenden Bodenfläche beabstandet sind und aus den Öffnungen heraus das Düngemittel auf die zu düngende Bodenfläche ablegbar ist.

Erfindungsgemäß umfasst der Düngemittelverteiler eine Verteileinrichtung mit wenigstens einem Ausbringschlauch, dem ein mit der Öffnung des Ausbringschlauches koinzidierender Prallteller zugeordnet ist.

Unter einem Prallteller wird ein Bauteil verstanden, welches im Strömungsweg eines aus einem Gülleschlauch austretenden Güllestrahls angeordnet ist. Beim Auftreffen auf den Prallteller ist die Relativgeschwindigkeit der im Güllestrahl enthaltenen Partikel so groß, dass die auf den Prallteller treffende Gülle nicht am Prallteller entlangfließt sondern von diesem zurückkatapultiert wird. Im Gegensatz zu der aus dem Stand der Technik gemäß DE 20 2021 102 219 U1 fließenden Weiterleitung, beziehungsweise fließenden Aufteilung eines Güllestroms in mehrere Teilströme, erfolgt bei der erfindungsgemäßen Vorrichtung bei Auftreffen des Güllestroms auf den Prallteller somit ein Zurückprallen der im Güllestrom enthaltenen Güllepartikel. Die Richtung, in die die Güllepartikel bei Auftreffen auf den Prallteller geleitet werden, ist abhängig von Faktoren wie dem Auftreffwinkel des Güllestroms auf den Prallteller und der Form des Pralltellers. Die Wurfweite der Partikel ist abhängig von der Aufprallgeschwindigkeit. Vereinfacht gesagt prallt das aus dem Ausbringschlauch austretende Düngemittel somit auf den Prallteller und wird von diesem fächerförmig verteilt.

Unter einer Verteileinrichtung wird ein Leitungssystem verstanden, welches wenigstens einen Einlass für ein pumpfähiges Düngemittel und wenigstens eine Auslassöffnung, vorzugsweise mehrere oder eine Vielzahl von Auslassöffnungen zur Ausbringung des Düngemittels umfasst. Dadurch, dass das auszubringende Düngemittel auf den Prallteller prallt, wird der aus der Auslassöffnung geleitete Düngemittelstrahl fächerförmig aufgesplittet und dementsprechend breit auf den zu düngenden Boden verteilt.

Im Arbeitseinsatz wir das pumpfähige Düngemittel mittels einer Pumpe, bei der es sich beispielsweise um eine Kreiselpumpe handeln kann, aus dem Güllefass in die Verteileinrichtung und letztlich in die dort vorgesehenen Ausbringschläuche gedrückt. Die Geschwindigkeit mit der das Düngemittel aus dem Ausbringschlauch austritt, ist insbesondere abhängig vom Pumpdruck und der Weite der Ausbringöffnung. Um die Austrittsgeschwindigkeit der Gülle aus dem Schlauch und damit auch die Aufprallgeschwindigkeit der Gülle auf den Prallteller zu steuern, kann an der Öffnung des Ausbringschlauches eine vorzugsweise einstellbare Querschnittsveränderung, beispielsweise eine einstellbare Düse, vorgesehen sein.

Vorzugsweise ist zwischen der Öffnung des Ausbringschlauches und dem Prallteller ein Abstand vorgesehen. welcher 5 mm bis 150 mm, vorzugweise 20 mm bis 100 mm, höchst vorzugsweise 40 mm bis 60 mm beträgt. Der genannte Abstand ermöglicht und/oder verbessert die Breitverteilung des auf die Prallteller auftreffenden Güllestroms und verhindert Verstopfungen in diesem Bereich.

Die Ausbringschläuche und/oder die Prallteller können an einem elastischen Träger angebracht sein. Der elastische Träger wiederum kann an das Gestell des Düngemittelverteilers gekoppelt sein.

Die elastischen Träger können ein unteres Ende umfassen, welches im Arbeitseinsatz die Bodenfläche kontaktiert. Die Träger sind vorzugsweise nachlaufend am Gestell des Düngemittelverteilers angebracht, sodass das genannte Ende des Trägers der Bodenkontur widerstandsarm folgen kann. Somit wird der Abstand des am elastischen Träger angebrachten Ausbringschlauches und/oder Pralltellers zum Boden auch auf unebenen Flächen in einer konstanten, vordefinierten Höhe gehalten.

In manchen Einsatzfällen kann es zudem vorteilhaft sein, die elastischen Träger dem Boden gegenüber so einzustellen, dass eine vom unteren Ende der Träger auf den Boden ausgeübte Vorspannkraft den Träger nicht nur führt, sondern darüber hinaus den Boden aufraut. So sind die im Düngemittel vorhandenen Nährstoffe einfacher vom Boden aufnehmbar.

Bei dem elastischen Träger kann es sich beispielsweise um einen Federzinken, vorzugsweise um einen Doppelfederzinken handeln. Solche Doppelfederzinken sind von Graserntemaschinen, wie beispielsweise Heuschwadern, bekannt. Die Doppelfederzinken sind aus einem Federstahldraht gefertigt und weisen eine U-förmige Kontur auf. Im mittleren Bereich befindet sich ein zylindrischer, schraubenförmig aus dem Federstahldraht gedrehter Federblock, dessen Drahtenden Zinken bilden, die radial nach Außen abstehen.

Zur Befestigung der Ausbringschläuche und/oder der Prallteller an den elastischen Trägern sind vorzugsweise lösbare Befestigungsmittel vorgesehen, mittels derer
- ein Abstand zwischen der Öffnung eines Ausbringschlauches und einem Prallteller und/oder
- ein Abstand von der Öffnung eines Ausbringschlauches zur Bodenfläche und/oder
- ein Abstand vom Prallteller zur Bodenfläche
einstellbar ist. Als Befestigungsmittel können beispielsweise Seil-, Schlauch- oder Kabelklemmen vorgesehen sein.

Vereinfacht gesagt, lassen sich Ausbringschlauch und Prallteller sehr variabel an den elastischen Trägern befestigen. Hierdurch lässt sich die Verteilung der ausgebrachten Streumenge über die Arbeitsbreite, also das Streubild, an individuelle Randbedingungen, wie beispielsweise die Konsistenz und die Viskosität des Düngemittels, anpassen. Um die Einstellarbeiten zu erleichtern, kann eine Streutabelle vorgesehen sein. Darin werden grundlegende Parameter wie die genannten Abstände und/oder die Neigung von Schlauchende und Prallteller gegenüber einer Vertikalen festgelegt. Aus den weiteren Parametern wie Düngersorte, Arbeitsbreite, Ausbringmenge und Fahrgeschwindigkeit ergeben sich die Einstellungen für Ausbringschlauch und Prallteller zur Realisation eines vordefinierten Streubildes.

Alternativ oder ergänzend zu einer Bodenführung durch die Enden der elastischen Träger kann auch vorgesehen sein, dass die Prallteller eine Unterseite mit einer Kufe aufweisen. Diese kontaktiert im Arbeitseinsatz die zu düngende Bodenfläche. Die Kufe kann am Prallteller angebracht, beispielsweise angeschweißt, sein. Sie kann aber auch aus dem Prallteller heraus ausgeformt sein. Eine Kufe hat einen im Vergleich zu einem elastischen Träger größeren Kontaktbereich zum Boden und arbeitet deshalb besonders bodenschonend.

Das Düngemittel wird über die Verteileinrichtung zu den Öffnungen der Ausbringschläuche transportiert. Um die Strömungsgeschwindigkeit des Düngemittels an der Austrittsstelle der Ausbringschläuche zu erhöhen, können Düsen vorgesehen sein. Hierdurch wird der Düngemittelstrom beschleunigt, trifft mit vergrößerter Geschwindigkeit auf die Prallteller und wird feiner und gleichmäßiger verteilt, als es bei geringerer Aufprallgeschwindigkeit der Fall wäre.

Die Prallteller können eine Prallfläche mit einer Kontur aufweisen, die flach oder gekantet oder konkav oder konvex ausgebildet ist. Mittels der Kontur des Pralltellers kann das Streubild insgesamt und auch die sich durch den Aufpralleffekt ergebende Größe der vom Prallteller abprallenden Düngemitteltropfen beeinflusst werden.

In einer bevorzugten Ausführungsform umfasst der Düngemittelverteiler wenigstens einen Ausbringschlauch, dem ein Schleppschuh zugeordnet ist, welcher im Arbeitseinsatz die zu düngende Bodenfläche kontaktiert und den Abstand von der Öffnung eines Ausbringschlauches zur Bodenfläche und/oder den Abstand vom Prallteller zur Bodenfläche konstant hält. Vorzugsweise ist nicht nur einem Ausbringschlauch, sondern vielen, höchst vorzugsweise allen Ausbringschläuchen, ein solcher Schleppschuh zugeordnet. Der Schleppschuh folgt im Arbeitseinsatz der Bodenkontur. Die Funktionsweise entspricht der weiter oben schon beschriebenen Funktion einer Prallteller-Kufe oder eines den Boden kontaktierenden elastischen Trägers. Besonders vorteilhaft ist jedoch, dass ein separater Schleppschuh auch separat höheneinstellbar ist. Der Prallteller kann somit vom Schleppschuh beabstandet sein und im Arbeitseinsatz einen Abstand von beispielsweise 10 cm zum Boden aufweisen. Auch hierdurch lässt sich das Streubild beeinflussen.

Analog zu einer Kufe hat auch ein Schleppschuh eine im Vergleich zum elastischen Träger große Bodenaufstandsfläche und arbeitet deshalb sehr bodenschonend.

Schleppschuh und Ausbringschlauch oder Schleppschuh und Prallteller oder Schleppschuh, Ausbringschlauch und Prallteller können jeweils an einen gemeinsamen, vorzugsweise elastischen Träger gekoppelt sein und eine gemeinsame Streueinheit bilden. Die Verteileinrichtung umfasst somit eine Vielzahl von einzelnen Streueinheiten. Jede Streueinheit verteilt das Düngemittel in einem Einzel-Streubild. Aus der Vielzahl der EinzelStreubilder ergibt sich wiederum ein Gesamtstreubild. Da die Anbringung von Ausbringschlauch, Prallteller und Schleppschuh und die Abstände der genannten Komponenten zueinander und zum Boden variabel einstellbar sind und diese Faktoren das Streubild beeinflussen, lässt sich auch das Streubild einer einzelnen Streueinheit so einstellen, dass sich aus der Zusammenfassung der vielen Einzelstreubilder ein optimales Gesamtstreubild der Verteileinrichtung ergibt.

Die Einzelstreubilder weisen in der Regel im mittleren Bereich eine große Düngemittelmenge auf, die zu den Außenseiten linear (Dreiecksstreubild) oder kurvenförmig (glockenförmig) abfällt. Die Einzelstreubilder sind vorzugsweise so einstellbar, dass sich zwischen zwei benachbarten Einzelstreubildern eine Überlappung ergibt. Im Ergebnis resultiert aus den sich überlappenden Einzelstreubildern ein Gesamtstreubild mit einer sehr gleichmäßigen Düngemittelverteilung. Der Variationskoeffizient eines solchen Gesamtstreubildes, das heißt, die Abweichung der Streumenge von einem Mittelwert über die Arbeitsbreite der Verteileinrichtung ist dementsprechend besonders niedrig.

Vorzugsweise ist der Schleppschuh lösbar am Träger der Verteileinrichtung angebracht und höhenvariabel einstellbar. Analog zu den Ausbringschläuchen und den Pralltellern können auch für die Schleppschuhe höhenverstellbare Seil-, Schlauch- oder Kabelklemmen vorgesehen sein.

Die erfindungsgemäße Aufgabe wird zudem durch ein Düngefahrzeug mit einem Düngemittelverteiler nach einem der Ansprüche 1 bis 11 gelöst.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt ein von einem Zugfahrzeug gezogenes Düngemittelfahrzeug im Arbeitseinsatz;
- Fig. 2: zeigt einen Düngemittelverteiler für ein Düngemittelfahrzeug;
- Fig. 3: zeigt ein Segment eines Düngemittelverteilers in einer perspektivischen Ansicht;
- Fig. 4: zeigt das Segment gem. Fig. 3 in einer Ansicht von hinten in einem angedeuteten Arbeitseinsatz;
- Fig. 5: zeigt eine schematische Darstellung einer Düngemittelverteilung;
- Fig. 6: zeigt eine vereinzelte Baugruppe des Segments gemäß Fig. 3 in einer Seitenansicht;
- Fig. 7: zeigt die Baugruppe gemäß Fig. 6 in einer Ansicht von hinten;
- Fig. 8: zeigt die Baugruppe gemäß Fig. 6 in einer Draufsicht:
- Fig. 9: zeigt die Baugruppe gemäß Fig 6 in einem angedeuteten Arbeitseinsatz.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten der Verteileinrichtung im Betriebsmodus.

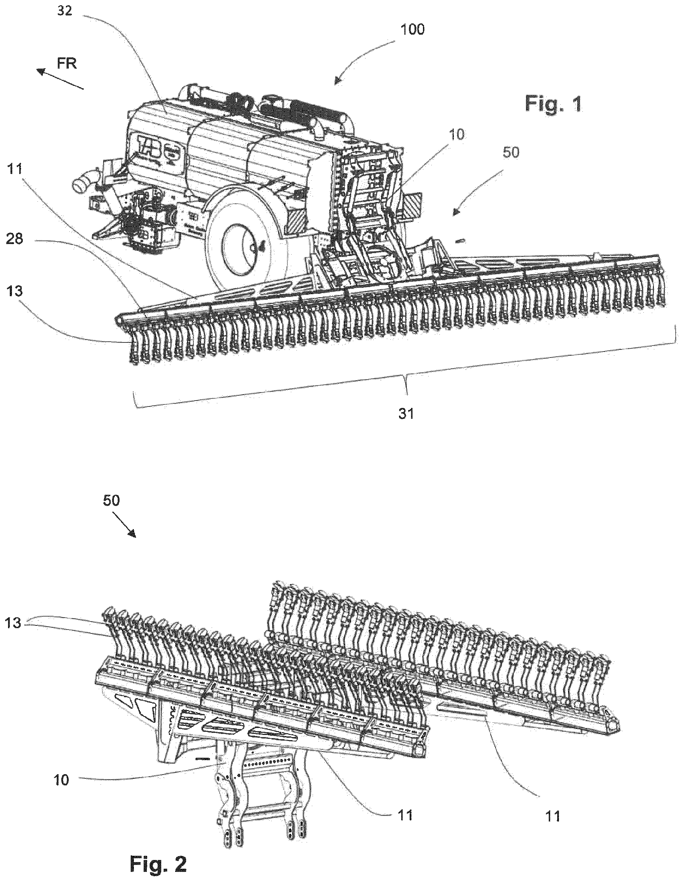

Fig. 1 zeigt ein Düngemittelfahrzeug 100 mit einem Düngemittelverteiler 50. Im Arbeitseinsatz wird das Düngefahrzeug 100 von einem hier nicht dargestellten Zugfahrzeug, beispielsweise einem Traktor, gezogen. Der Düngemittelverteiler 50 stellt ein eigenständiges Arbeitsaggregat dar und ist grundsätzlich an unterschiedliche Arten von Düngefahrzeugen anbaubar. Im vorliegenden Ausführungsbeispiel umfasst der Gülleverteiler 50 ein Gestell 10, das zwei aus- und einklappbare Ausleger 11 trägt. Für Transportfahrten und zum Arbeitseinsatz lässt sich die Breite des Düngefahrzeuges 100 durch Einklappen der Ausleger 11 an straßenverkehrsrechtliche Vorschriften anpassen. Im Arbeitseinsatz lassen sich bei ausgeklappten Auslegern 11 Arbeitsbreiten 31 von bis zu 30 Metern realisieren.

An den Auslegern 11 des Gestells 10 ist eine Vielzahl von Ausbringschläuchen 13 nebeneinander angebracht. Im Arbeitseinsatz überstreichen die Ausbringschläuche 13 eine zu düngende Bodenfläche 40. Dabei wird ein zunächst in einem am Düngefahrzeug 100 vorgesehenen Tank 32 gespeichertes Düngemittel 41 über eine Verteileinrichtung 12 in die Ausbringschläuche 13 gepumpt. Das Düngemittel 41 tritt dann durch an den Ausbringschläuchen 13 vorgesehene Öffnungen 14 aus und wird auf der Bodenfläche 40 abgelegt. Der Begriff "Düngemittel" ist sehr breit zu verstehen. Grundsätzlich ist jede Art pumpfähiger Substrate zur Ausbringung mit der erfindungsgemäßen Verteileinrichtung geeignet. Als Düngemittel 41 in Betracht kommt insbesondere die in der landwirtschaftlichen Nutztierhaltung anfallende Gülle, die im Wesentlichen aus Urin und Kot besteht. Je nach Beigabe von Einstreu und Wasser spricht man von Dick- oder Dünngülle, Schwemmmist oder Flüssigmist. Grundsätzlich ist der erfindungsgemäße Düngemittelverteiler aber auch zur Ausbringung anderer pumpfähiger Substrate, wie beispielsweise Klärschlamm, Wasser oder mit Düngemitteln vermischtes Wasser geeignet und vorgesehen.

Fig. 2 zeigt den Düngemittelverteiler 50 im vom Düngefahrzeug 100 abgebauten Zustand mit eingeklappten Auslegern 11. Es ist zu erkennen, dass die Ausbringschläuche 13 im eingeklappten Zustand nach oben ragen. Hierdurch wird vermieden, dass Düngemittelreste bei Transportfahrten aus den Öffnungen 14 der Ausbringschläuche 13 heraustropfen.

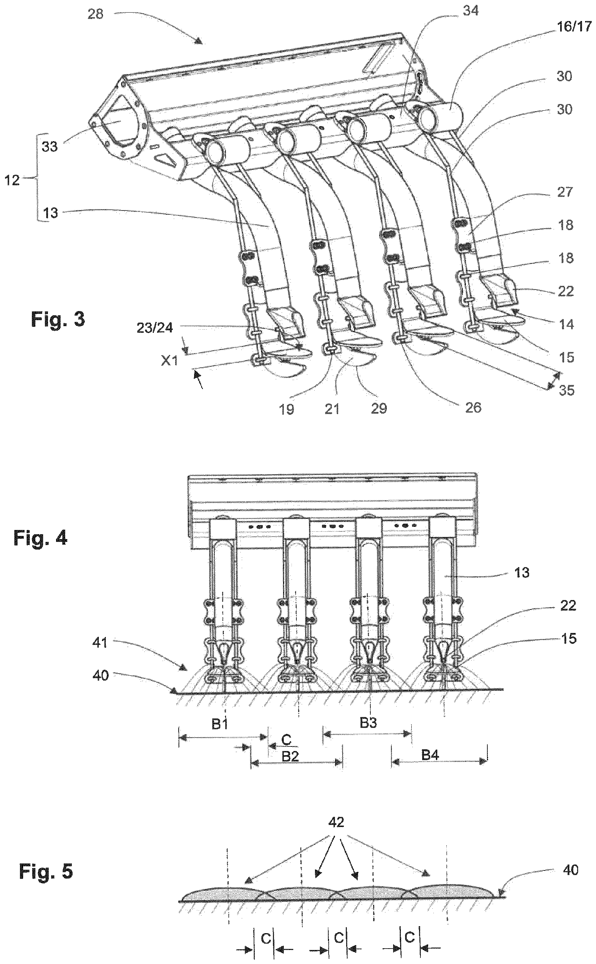

Fig. 3 zeigt ein Segment 28 eines Düngemittelverteilers 50 in einer perspektivischen Ansicht. Das Segment 28 umfasst einen Hohlkörper 33. Der Hohlkörper 33 und die Ausbringschläuche 13 sind Bestandteile einer Verteileinrichtung 12. Unter der Verteileinrichtung 12 wird somit das Leitungssystem zum Transport des Düngemittels von einer am Tank 32 des Düngefahrzeuges 100 vorgesehenen Austrittsöffnung bis zu den an den Ausbringschläuchen 13 vorgesehenen Öffnungen 14 verstanden.

Am Segment 28, beziehungsweise an einer mit dem Hohlköper 33 verbundenen Halterung 34 sind elastische Träger 16 befestigt. Im vorliegenden Ausführungsbeispiel sind als Träger 16 Doppelfederzinken 17 vorgesehen. Die Doppelfederzinken 17 weisen zwei Zinken 30 mit Enden 19 auf. Die Enden 19 können im Arbeitseinsatz die zu düngende Bodenfläche 40 kontaktieren. Es ist jedoch nicht ausgeschlossen, dass die Enden 19 der Träger 16 im Arbeitseinsatz keinen Bodenkontakt haben. Je nach Ausführungsform kann die Bodenführung auch über Schleppschuhe 21 oder Gleitkufen realisiert sein. Es ist auch möglich, dass keine Bodenführung vorgesehen und das System dementsprechend freitragend ist.

Im vorliegenden Ausführungsbeispiel ist an den Doppelfederzinken 17 weiterhin ein Prallteller 15 mit einer Breite 35 und ein Schleppschuh 21 angebracht. Der Prallteller 15 hat im dargestellten Ausführungsbeispiel eine ebene Kontur 24. Zur Erzielung anderer Streubilder könnte er jedoch auch dachartig gekantet, konisch oder konvex ausgeformt sein. Der Prallteller 15 weist einen Abstand X1 zur Öffnung 14 des Ausbringschlauches 13 auf. Im dargestellten Ausführungsbeispiel ist die Öffnung 14 oberhalb des Pralltellers 15 angeordnet. Bei dieser Anordnung reicht schon ein geringfügiger Ausbringdruck in Kombination mit der natürlichen Schwerkraft, um den auf den Prallteller 15 treffenden Güllestrom in feinste Partikel zu separieren und mit Streubreite B1, B2, B3, B4 (vgl. Fig. 4) auf der zu düngenden Bodenfläche auszubringen. Im Gegensatz zu einer fließenden Breitverteilung, wie sie aus dem als Stand der Technik bekannten Gülleauslauf gemäß DE 20 2021 102 219 U1 bekannt ist, werden in der Gülle vorhandene größere Brocken beim Auftreffen auf den Prallteller 15 mechanisch aufgespalten, vereinfacht gesagt: zerstäubt.

Fig. 4 zeigt das Segment 28 gem. Fig. 3 in einer Ansicht von hinten in einem angedeuteten Arbeitseinsatz. An den Enden 19 der Ausbringschläuche 13 sind Düsen 22 angeordnet. Mittels der Düsen 22 wird das aus den Öffnungen 14 austretende Düngemittel 41 beschleunigt und in Form eines Düngemittelstrahls auf Prallteller 15 mit Prallflächen 23 geleitet. Von den Prallflächen 23 wird das Düngemittel 41 fächerförmig vereinzelt und über die Arbeitsbreiten B1, B2, B3 und B4 auf der Bodenfläche 40 abgelegt. Jedem Ausbringschlauch 13 ist somit ein Prallteller 15 zugeordnet und von jedem der aus den Ausbringschläuchen 13 austretenden Düngemittelstrahlen wird ein einzelnes Streubild mit einer Ausbringmenge 42 je Streubild erzeugt. Die Einzelstreubilder mit den Breiten B1, B2, B3 und B4 sind vorzugsweise breiter als die Breite 35 eines Prallteller 15 und überlappen einander in den Randbereichen. In Fig. 4 ist einer dieser Überlappungsbereiche als Überlappungsbereich C kenntlich gemacht.

Fig. 5 zeigt eine schematische Darstellung einer Düngemittelverteilung mit vier Ausbringmengen 42 die von den in Figur 4 dargestellten vier Ausbringschläuchen 13 auf der Bodenfläche 40 abgelegt worden sind.

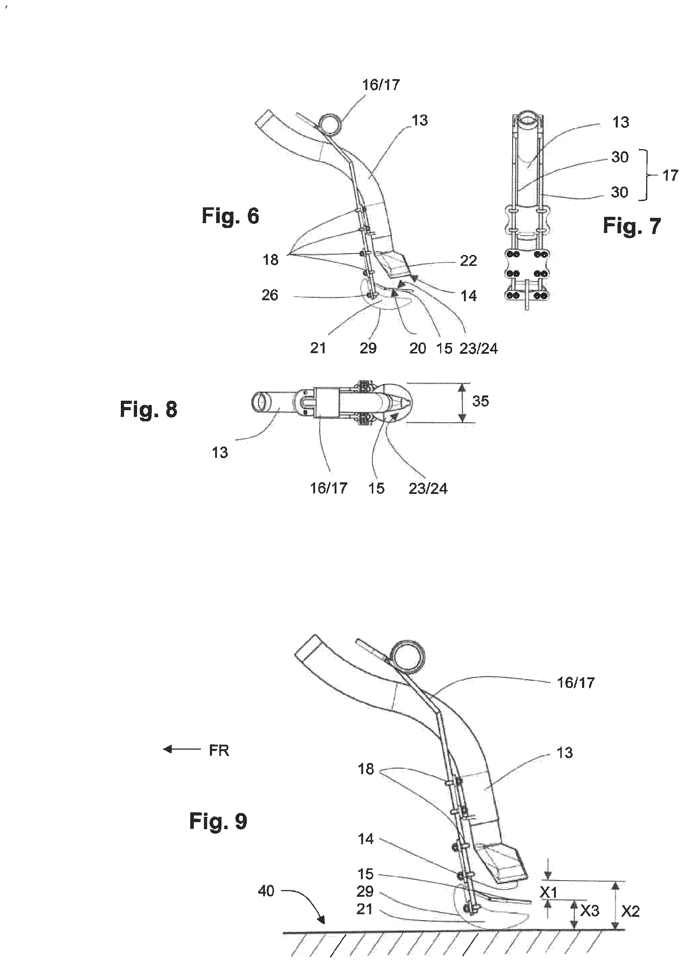

Die Figuren 6 bis 8 zeigen eine vereinzelte Baugruppe des Segments gemäß Fig. 3 in einer Seitenansicht, einer Ansicht von hinten und einer Draufsicht. Der Ausbringschlauch 13 und der Prallteller 15 sind mit Befestigungsmitteln 18 an den Zinken 30 der Doppelfederzinken 17 angebracht. Der Schleppschuh 21 ist mit Befestigungsmitteln 26 an den Zinken 30 angebracht. Im dargestellten Ausführungsbeispiel sind als Befestigungsmittel 18, 26 Seilklemmen vorgesehen. Die Seilklemmen lassen sich einfach lösen. Schon ein geringfügiges Lockern der Befestigungsmittel 18, 26 ist ausreichend, um die Höheneinstellung von Ausbringschlauch 13, Prallteller 15 und Schleppschuh 21 zu variieren.

Fig. 9 zeigt die Baugruppe gemäß Fig 6 in einem angedeuteten Arbeitseinsatz. Mittels der einstellbaren Befestigungsmittel 18, 26 ist der Abstand X1 von der Öffnung des Ausbringschlauches 13 bzw. der Düse 22 zum Prallteller 15 auf ein gewünschtes Maß eingestellt worden. Analog dazu ist auch ein Abstand X2 der Öffnung 14 zur Bodenfläche 40 sowie ein Abstand X3 des Pralltellers 15 zur Bodenfläche 40 eingestellt worden. Der Abstand X2, also die maximale Höhe des Ausbringschlauches 14 über dem Boden, ist vorzugsweise kleiner als 200 mm.

Um eine bodenschonende Arbeitsweise zu realisieren weist der Schleppschuh 21 eine abgerundeten Kontur 29 auf.

### Bezugszeichenliste

- 10: Gestell
- 11: Ausleger (an 10)
- 12: Verteileinrichtung
- 13: Ausbringschlauch
- 14: Öffnung (an 13)
- 15: Prallteller
- 16: Träger
- 17: Doppelfederzinken
- 18: Befestigungsmittel
- 19: Ende (von 16)
- 20: Unterseite (von 15)
- 21: Schleppschuh
- 22: Düse
- 23: Prallfläche
- 24: Kontur (von 15)
- 25: -
- 26: Befestigungsmittel
- 27: Schlauchhalter
- 28: Segment
- 29: Kontur (von 21)
- 30: Zinken (von 17)
- 31: Arbeitsbreite
- 32: Tank (an 100)
- 33: Hohlkörper
- 34: Halterung
- 35: Breite (von 15)

- 40: Bodenfläche
- 41: Düngemittel
- 42: Ausbringmenge je Ausbringschlauch

- 50: Düngemittelverteiler

- 100: Düngefahrzeug
- B1: Breite
- B2: Breite
- B3: Breite
- B4: Breite
- C: Überlappungsbereich
- FR: Fahrtrichtung
- v: Strömungsgeschwindigkeit
- X1: Abstand
- X2: Abstand
- X3: Abstand

## Patentansprüche

1. Düngemittelverteiler (50) zur Ausbringung pumpfähiger Düngemittel (41), umfassend:
- ein mit einem Düngefahrzeug (100) koppelbares Gestell (10) mit sich quer zur Fahrtrichtung (FR) erstreckenden Auslegern (11),
- eine Verteileinrichtung (12) zur Weiterleitung von aus dem Düngefahrzeug (100) geförderten Düngemitteln (41),
- wobei die Verteileinrichtung (12) eine Vielzahl von Ausbringschläuchen (13) mit Öffnungen (14) zur bodennahen Ausbringung des Düngemittels (41) aufweist,
- und wobei die Öffnungen (14) der Ausbringschläuche (13) im Arbeitseinsatz weniger als 500 mm von einer zu düngenden Bodenfläche (40) beabstandet sind und aus den Öffnungen (14) heraus das Düngemittel (41) auf die zu düngende Bodenfläche (40) ablegbar ist,
**dadurch gekennzeichnet, dass** wenigstens einem Ausbringschlauch (13) der Verteileinrichtung (12) ein mit der Öffnung (14) des Ausbringschlauches (13) koinzidierender Prallteller (15) zugeordnet ist, auf welchen das auszubringende Düngemittel (41) im Arbeitseinsatz prallt und von welchem es fächerförmig verteilt wird.

2. Düngemittelverteiler (50) nach Anspruch 1, **dadurch gekennzeichnet, dass** zwischen der Öffnung (14) des Ausbringschlauches (13) und dem Prallteller (15) ein Abstand (X1) vorgesehen ist, welcher 5 mm bis 150 mm, vorzugweise 20 mm bis 100 mm, höchst vorzugsweise 40 mm bis 60 mm beträgt.

3. Düngemittelverteiler (50) nach Anspruch 1 oder 2, **dadurch gekennzeichnet, dass** die Ausbringschläuche (13) und/oder die Prallteller (15) an einem elastischen Träger (16) angebracht sind.

4. Düngemittelverteiler (50) nach Anspruch 3, **dadurch gekennzeichnet, dass** die Träger (16) wenigstens ein unteres Ende (19) umfassen, welches im Arbeitseinsatz die Bodenfläche (40) kontaktiert.

5. Düngemittelverteiler (50) nach einem der Ansprüche 3 oder 4, **dadurch gekennzeichnet, dass** als Träger (16) Federzinken, vorzugsweise Doppelfederzinken (17) vorgesehen sind.

6. Düngemittelverteiler (50) nach einem der Ansprüche 1 bis 5, **dadurch gekennzeichnet, dass** die Ausbringschläuche (13) und/oder die Prallteller (15) mit lösbaren Befestigungsmitteln (18) an den Trägern (16) befestigt sind, so dass
- der Abstand (X1) zwischen der Öffnung (14) eines Ausbringschlauches (13) und einem Prallteller (15) und/oder
- ein Abstand (X2) von der Öffnung (14) eines Ausbringschlauches (13) zur Bodenfläche (40) und/oder
- ein Abstand (X3) vom Prallteller (15) zur Bodenfläche (40) einstellbar ist.

7. Düngemittelverteiler (50) nach einem der Ansprüche 1 bis 6, **dadurch gekennzeichnet, dass** der Prallteller (15) eine Unterseite (20) mit einer Kufe oder einem Schleppschuh (21) umfasst, welche im Arbeitseinsatz eine zu düngende Bodenfläche (40) kontaktiert.

8. Düngemittelverteiler (50) nach einem der Ansprüche 1 bis 7, **dadurch gekennzeichnet, dass** an der Öffnung (14) der Ausbringschläuche (13) Düsen (22) vorgesehen sind, welche eine Strömungsgeschwindigkeit (v) des auszubringenden Düngemittels (41) beschleunigen.

9. Düngemittelverteiler (50) nach einem der Ansprüche 1 bis 8, **dadurch gekennzeichnet, dass** die Prallteller (15) eine Prallfläche (23) mit einer Kontur (24) aufweisen, die flach oder gekantet oder konkav oder konvex ausgebildet ist.

10. Düngemittelverteiler (50) nach einem der Ansprüche 1 bis 9, **dadurch gekennzeichnet, dass** wenigstens einem Ausbringschlauch (13) der Verteileinrichtung (12) ein Schleppschuh (21) zugeordnet ist, welcher im Arbeitseinsatz die zu düngende Bodenfläche (40) kontaktiert und den Abstand (X2) von der Öffnung (14) eines Ausbringschlauches (13) zur Bodenfläche (40) und/oder den Abstand (X3) vom Prallteller (15) zur Bodenfläche (40) konstant hält.

11. Düngemittelverteiler (50) nach einem der Ansprüche 1 bis 10, **dadurch gekennzeichnet, dass** Schleppschuh (21) und Ausbringschlauch (13) oder
Schleppschuh (21) und Prallteller (15) oder Schleppschuh (21), Ausbringschlauch (13) und Prallteller (15) jeweils an einen gemeinsamen Träger (16) gekoppelt sind.

12. Düngemittelverteiler (50) nach Anspruch 11, **dadurch gekennzeichnet, dass** zur Kopplung des Schleppschuhs (25) an den Träger (16) lösbare und am Träger (16) höhenvariabel anbringbare Befestigungsmittel (26) vorgesehen sind.

13. Düngefahrzeug (100) umfassend einen Düngemittelverteiler (50) nach einem der Ansprüche 1 bis 12.
